Europäisches Patentamt

European Patent Office

Office européen des brevets

(19)

(11) Publication number: **0 109 730**
A1

(12) **EUROPEAN PATENT APPLICATION**

(21) Application number: **83304994.3**

(22) Date of filing: **30.08.83**

(51) Int. Cl.³: **B 60 Q 11/00**
**B 60 Q 1/38**

(30) Priority: **16.11.82 GB 8232655**

(43) Date of publication of application:
**30.05.84 Bulletin 84/22**

(84) Designated Contracting States:
**AT BE CH DE FR GB IT LI LU NL SE**

(71) Applicant: **Danor Electronics Limited**
**2 Clovelly Road**
**Glenfield Leicester LE3 8AA(GB)**

(72) Inventor: **Palmer, Norman Harold George**
**2 Clovelly Road**
**Glenfield Leicester(GB)**

(74) Representative: **Spoor, Brian et al,**
**c/o E.N. LEWIS & TAYLOR 144 New Walk**
**Leicester, LE1 7JA(GB)**

(54) **Flasher circuit for vehicle direction indicator lamps.**

(57) When a direction indicator switch 11 is initially operated for either left- or right-hand signalling, a charging capacitor C applies a pulse to the base of a transistor TR1, thereby rendering it conductive so that a further pulse is similarly applied to the base of a transistor TR2. If a direction indicator lamp 14 connected in series with the collector/emitter path of the transistor TR2 is operational, current will flow through the lamp 14 and cause the filament of the latter to heat up, so that its resistance increases. The resultant increase in voltage drop across the lamp 14 then causes a diode D2 to unclamp the cathode of a zener diode ZD1, so that current may be applied to the base of transistor TR1 through the diode ZD1 even after the capacitor C has finished charging. In the event that the lamp 14 is short-circuited, the cathode of the diode ZD1 will remain clamped so that the transistors TR1 and TR2 will cease conducting when the capacitor C has fully charged.

FIG. I.

TITLE:  FLASHER CIRCUIT  FOR VEHICLE DIRECTION INDICATOR LAMPS

This invention relates to a flasher circuit for vehicle direction indicator lamps.

When a vehicle is used to tow a trailer, it is necessary for the direction indicator lamps of the trailer to flash simultaneously with those of the towing vehicle. In addition, a warning lamp must be provided in the towing vehicle to indicate that the indicator lamps on the trailer are operating properly. Conventionally, this has been performed in a number of different ways.

In one conventional arrangement, the indicator lamps on the trailer are connected directly in  parallel with those on the towing vehicle, and a current-sensitive relay is connected in series with an existing flasher unit on the vehicle, contacts of the relay being connected to the above-mentioned warning lamp. In normal operation, the current flowing through the indicator lamps also flows through a coil of the relay, thereby causing the contacts to close and operate the warning lamp in synchronism with energisation of the indicator lamps. When the vehicle is used without the trailer, the current taken by the indicator lamps of the vehicle is insufficient to close the relay contacts, so the warning lamp does not operate. Although this arrangement has several advantages (such as its low cost and simplicity of installation), it nevertheless has rather severe drawbacks, in that the current-sensitive relay must be very carefully adjusted, and the current taken by the indicator lamps will be affected by various factors, such as temperature and corrosion of exposed connections. In addition, the arrangement cannot be employed with flasher units whose frequency of operation is current-dependent, nor with units which are plugged directly into printed circuits.

In a second type of conventional arrangement, relay coils are connected in series with the flasher unit and in parallel with the indicator lamps of the towing vehicle, while contacts of the relay are connected in series with the indicator lamps of the trailer and with the coil of a current relay. When the indicator lamps are energised by the flasher unit, the relay contacts close and operate the current relay to energise the aforementioned warning lamp. Although this arrangement is relatively reliable in operation and does not increase the load on the flasher unit, it has the disadvantages of being relatively expensive and sufficiently heavy that it must be mounted on a shell of the towing vehicle. In addition, the arrangement must be mounted in an upright position in order to ensure proper operation of the relay contacts.

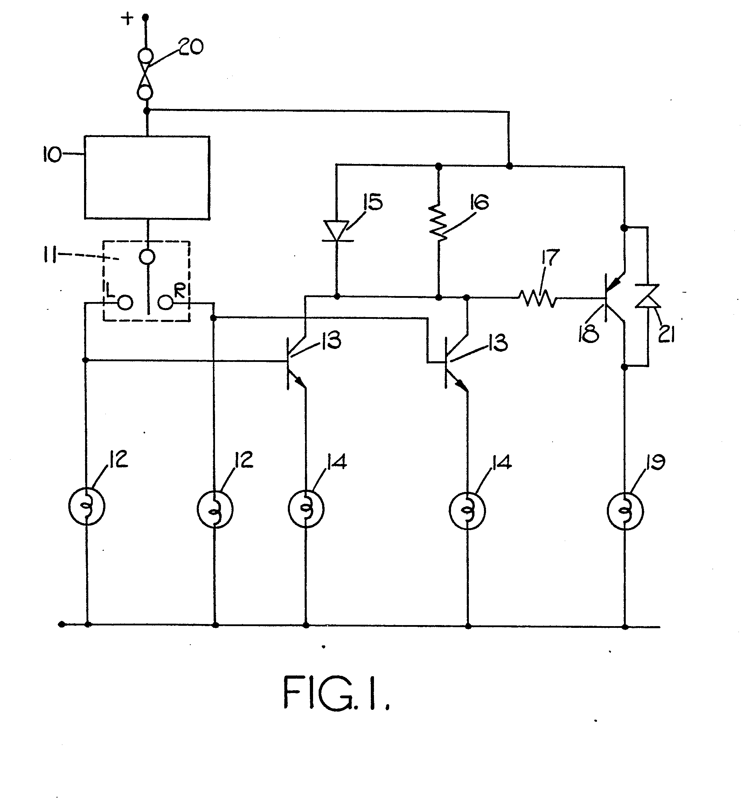

These disadvantages can be overcome by employing transistor circuits instead of relays, as illustrated in Figure 1 of the accompanying drawings. In the illustrated arrangement, a flasher unit 10 is connected to the movable contact of a direction indicator switch 11, this switch having fixed contacts L and R which are connected respectively to left- and right-hand direction indicator lamps 12 of the towing vehicle. Each of contacts L and R is also connected to the base of a respective transistor 13 whose collector-emitter path is connected in series with left- or right-hand direction indicator lamps 14 (as the case may be) of the trailer. The collectors of the transistors 13 are connected to a positive power supply by way of a diode 15 and a resistor 16 connected in parallel with one another, and are also connected via a resistor 17 to the base of a transistor 18. The collector-emitter path of the transistor 18 is connected between the positive power supply and a warning lamp 19 which is positioned in the towing vehicle. A line fuse 20 is provided to protect the circuitry as a whole, while a zener diode 21 is connected across the collector-emitter path of the transistor 18 to protect the latter from voltage transients.

In order to operate either the left- or the right-hand indicator lamps of both the towing vehicle and the trailer, the movable contact of the switch 11 is moved into engagement with the appropriate fixed contact L or R, thereby connecting the lamps 12 to the flasher unit 10. At the same time, the appropriate one of the transistors 13 will be rendered conductive, so that a current will flow through the respective indicator lamps 14 by way of the diode 15 and the collector-emitter path of the transistor 13. The resultant voltage drop produced across the diode 15 (which will normally be of the order of 0.8V for a 12V supply voltage) causes a base current to flow from the transistor 18, thereby rendering the transistor conductive and energising the warning lamp 19. When the flasher unit 10 de-energises the lamps 12, the appropriate transistor 13 becomes non-conductive so that the lamps 14 are also de-energised, and there is no longer a voltage drop across the diode 15 sufficient to render the transistor 18 conductive, so the warning lamp 19 is de-energised too.

If the trailer is not connected to the towing vehicle, or if there is an open circuit in the lamps 14, there will be no current flow through the diode 15 and hence the warning lamp 19 will remain de-energised at all times. The resistor 16 is provided to ensure that sufficient current will not flow through the diode 15 to cause

operation of the warning lamp 19 in the event that the indicator lamps 14 are open-circuited and the bulbholders thereof become corroded. The value of the resistor 16 is chosen so that a minimum current of about 0.6A must flow through the diode 15 before the warning lamp 19 is energised.

Despite the fact that it overcomes the drawbacks mentioned above, this arrangement is still disadvantageous, in that overheating can occur in any of the following circumstances.

(1)   If the voltage at the positive input falls below the voltage at the indicator lamps 14 on the trailer. This can occur if the positive supply to the relay of the flasher unit 10 is connected other than directly to the positive power supply.

(2)   If the voltage across the indicator lamps 12 of the towing vehicle does not rise to within one volt of the positive power supply when the lamps are energised.

(3)   If the voltage across the lamps 12 does not fall to zero when they should be de-energised.

In addition, the transistors 13 can be damaged before the fuse 20 has had time to blow if there is a short-circuit at the indicator lamps 14, and similarly the transistor 18 will be damaged if there is a short-circuit at the warning lamp 19.

It is an object of the present invention to provide an improved flasher circuit of the type shown in Figure 1, wherein the above-mentioned disadvantages are overcome.

In accordance with the broadest aspect of the present invention there is provided a flasher circuit for vehicle direction indicator lamps in which a sensor circuit is provided for ascertaining the condition of the lamps prior to affording an operative electrical supply thereto.

The sensor circuit may provide a sensing pulse to the lamps to determine their condition. Should the sensor circuit detect that the lamps are in short circuit condition, then upon completion of the sensing pulse the circuit will switch off. In the alternative, should the sensor circuit detect that the lamps are functional, then an operative electrical supply will be made available to the relevant lamp.

- 7 -

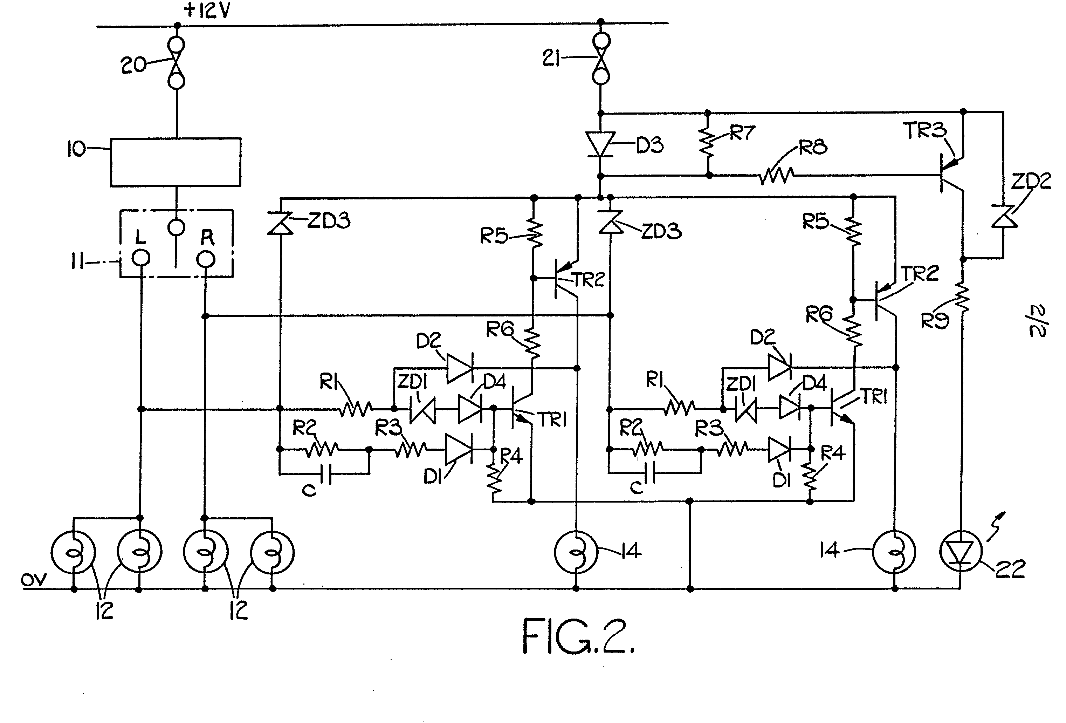

The invention will now be further described, by way of example only, with reference to Figure 2 of the accompanying drawings, which is a diagram of a flasher circuit according to the present invention.

As in the circuit of Figure 1, a flasher unit 10 is connected to the movable contact of a direction indicator switch 11, fixed contacts L and R of the switch being connected respectively to left- and right-hand indicator lamps 12 of the towing vehicle. Each of the contacts L and R are now however also connected to the base of a transistor TR1 by way of a resistor R1, a zener diode ZD1 and a diode D4. Connected in parallel with the resistor R1 and the diodes ZD1 and D4 is a series circuit of two resistors R2,R3 and a diode D1, a capacitor C being connected in parallel with the resistor R2. A resistor R4 is connected across the base-emitter junction of the transistor TR1, while two series-connected resistors R5 and R6 are connected to the collector thereof. A transistor TR2 has its base coupled to the connection point between the resistors R5 and R6, while its collector-emitter path is connected in series with the left- or right-hand indicator lamps 14 of the trailer, as the case may be. A diode D2 is connected between the collector of the transistor TR2 and the connection between the resistor R1 and the zener diode ZD1.

- 8 -

The resistors R5 and the emitters of the transistors TR2 associated with both left- and right-hand signal operation are connected to a positive power source via a diode D3 and a fuse 21.  A resistor R7 is connected across the diode D3, while the cathode of the diode is connected via a resistor R8 to the base of a transistor TR3 whose collector-emitter path is connected in series with a resistor R9 and a light-emitting diode 22, which takes the place of the warning lamp 19 in Figure 1.  A zener diode ZD2 is connected across the collector-emitter path of the transistor TR3 to prevent  the latter from being damaged by voltage transients, as before.

Zener  diodes ZD3, the purpose of which will be explained later, are connected between the cathode of the diode D3 and the fixed contacts L and R of the switch 11, respectively. Reference numeral 20 denotes a live fuse connected between the flasher unit 10 and the positive power supply, in the same manner as in the circuit of Figure 1.

During normal operation of the flasher circuit with the trailer fitted to the towing vehicle, the movable contact of the direction indicator switch 11 is moved into engagement with the fixed contact L or R, according to whether a left- or a right-hand indication is to be made.  The flasher unit 10 is then able to energise and de-energise the apppropriate indicator lamps 12 in the usual manner. For the purpose of the ensuing description, it will be assumed that a left-hand indication is being made, although the circuit operation for a right-hand indication will of course be exactly the same.

The capacitor C is initially in a discharged state, but will commence charging through the resistor R3, the diode D1 and the base-emitter junction of the transistor TR1 as soon as the indicator lamps 12 are energised by the flasher unit 10. At this time, the indicator lamps 14 of the trailer will be cold and accordingly the resistance of their incandescent filaments will be low (about 0.2 ohms). Accordingly, the voltage drop across the lamps 14 will be small, and the diode D2 will clamp the voltage at the connection between the resistor R1 and the zener diode ZD1 at a level well below the zener voltage, so there will be no current flowing to the base of the transistor TR1 through the resistor R1.

The charging current of the capacitor C will provide an initial pulse of base current to the transistor TR1, thereby turning the latter on. This in turn will render the transistor TR2 conductive, so that a pulse of current is produced from the collector of the latter. Assuming that the indicator lamps 14 are working properly, they will be energised by this current pulse. As the current flows through the lamps 14, the filaments of the latter will heat up and their resistance will increase to about 7 ohms. Consequently, the voltage drop across the lamps 14 will also increase, thereby increasing the voltage at the anode of the diode D2. When this voltage exceeds the zener voltage of the diode ZD1, current will be supplied to the base of the transistor TR1 additionally by way of the resistor R1, the diode ZD1 and the diode D4. The current through resistor R1 enables transistor TR1 to remain in conduction after the charging current of capacitor C has ceased. The current flowing through the lamps 14 will decrease as the latter heat up. Typically, this current will fall to about 1.75 amps from an initial inrush level of 4.0 amps.

When the transistor TR2 is rendered conductive as aforesaid, current will flow through the diode D3, and the forward voltage across this diode will be sufficient to turn on the transistor TR3 by way of the resistor R8. The collector current of the transistor TR3 will flow via the resistor R9 to illuminate the warning LED 22, which is installed in the towing vehicle. Thus, the LED 22 will be energised synchronously with the indicator lamps 14.

The circuit remains in the above-described condition until the flasher unit 10 switches off. When this occurs, the base current of the transistor TR1 will be terminated and both of the transistors TR1 and TR2 will be turned off. Since the transistor TR2 is no longer conductive, the indicator lamps 14 of the trailer will be de-energised. Immediately prior to such turning off, the capacitor C will have been charged to a voltage V (typically 10 volts). When the flasher unit 10 switches off, the voltage across the indicator lamps 12 of the towing vehicle will drop to zero (assuming that the unit 10 is of the electronic rather than bimetallic strip type). This will in turn cause the voltage at the connection between the capacitor C and the resistor R1 to drop to zero, and hence the voltage at the connection between the capacitor C and the resistor R3 will drop to -V. The diode D1 is provided to protect the base-emitter junction of the transistor TR1 from this negative voltage. The capacitor C will then commence discharging via the resistor R2.

When the transistor TR2 is turned off, current will cease to flow through the diode D3, and hence the transistor TR3 will be rendered non-conductive. Hence the warning LED 22 will be de-energised synchronously with the indicator lamps 14 of the trailer.

During the time for which the indicator lamps 12 and 14 are de-energised, the capacitor C will continue to discharge as aforesaid. However, the voltage across the capacitor C will only have fallen by a relatively small amount (typically 0.8 volts) by the time the indicator lamps are energised once again. The magnitude and duration of the base current of transistor TR1 which is derived from the capacitor C on the second and subsequent flashes will therefore be very much less than on the first flash. This reduced current is nevertheless still sufficient to cause the voltage at the anode of the diode D2 to rise above the zener voltage of diode ZD1, because the resistance of the lamps 14 on the trailer will be higher due to the lamps still being warm from their previous energisation.

When the trailer is not connected to the towing vehicle, there will be no flow of current through the collector-emitter path of the transistor TR2. Consequently, there will be no current flow through the diode D3 and the warning LED 22 will remain de-energised at all times.

The LED 22 will typically have a forward voltage of only about 2 volts, and the resistor R9 is provided to control the current therethrough. In the event of there being a short-circuit across the LED 22, no damage will result since the resistor R9 will limit the current, typically to about 25 mA. The resistor R7 (in parallel with the diode D3) is provided to ensure that the LED22 does not come on if the current to the indicator lamps 14 is less than a certain value, say 0.6 amps, which could happen with an open-circuited lamp 14 in a corroded holder.

In the event of voltage transients being present at the anode of the diode D3 or at the emitters of the transistors TR1, the zener diodes ZD3 will cause current to flow into the base of the transistors TR1, thereby turning the transistors on. This will in turn cause the transistors TR2 to turn on and the transient will be dissipated in the indicator lamps 14. Since both of the transistors TR1 and TR2 will conduct for the duration of the transient, they will protect the entire flasher circuit from damage.

The diodes D4 are provided to prevent the occurrence of oscillation in the circuit as the base current of the transistor TR1 falls to a level which is too low to maintain the transistor properly in conduction.

As mentioned above, if the flasher unit 10 is of the electronic type then the voltage across the indicator lamps 12 of the towing vehicle will switch between zero and the level of the positive supply (usually 12 volts) during flashing. If however the unit 10 is of the type which incorporates a bimetallic strip, then this voltage may switch between, say, 10.5 and 3.0 volts. The zener diode ZD1 included in the base circuit of each transistor TR1 ensures that the 3.0 volts present across the lamps during the interpulse period will not energise the lamps 14 of the trailer.

If a short-circuit is present anywhere between the flasher circuit and the indicator lamps 14 of the trailer (for example if one or more of the indicator laps is short-circuited), then the cathode of the respective diode D2 will be at zero volts, and the voltage at the diode anode will be unable to rise more than one volt above zero. Hence, the flow of base current to the transistor TR1 through the zener diode ZD1 will be prevented. Under this condition, the initial current pulse from the collector of the transistor TR2 will have a magnitude dependent upon the gain of the transistor, but will fall if the resistance of the short-circuit increases beyond a predetermined level. The voltage at the collector of the transistor TR2 will be equal to the product of this resistance and the fault current. In the event that this voltage rises sufficiently to remove the previously-described clamp provided by the diode D2, the transistor TR1 will receive base current via the resistor R1 and the zener diode ZD1, as under normal operating conditions. This is quite acceptable, since the fault resistance will then be high enough for the transistor TR2 to operate continuously without overheating. During the second and subsequent flashes, the very small charge delivered by the capacitor C into the base of the transistor TR1 will result in current pulses of only a few microseconds duration through the transistor TR2, and hence are insignificant as far as heating of the transistor TR2 is concerned.

CLAIMS:

1. A flasher circuit for vehicle direction indicator lamps (14) including a supply circuit (21, D3, TR2) through which the indicator lamp or lamps (14) is or are energised, characterised in that a sensor circuit initially ascertains the condition of the indicator lamp or lamps (14) before each flashing operation and allows the lamp or lamps (14) to be energised by the supply circuit only in the event that the sensor circuit does not ascertain a fault condition.

2. A flasher circuit as claimed in claim 1, wherein the sensor circuit is operative to apply a sensing pulse to said indicator lamp or lamps (14) in order to ascertain the condition thereof, the indicator lamp or lamps (14) being de-energised at the termination of the sensing pulse in the event that the indicator lamp or any one of the indicator lamps (14) is in a short-circuit condition.

3. A flasher circuit as claimed in claim 2, wherein the supply circuit is rendered inoperative until the voltage drop across the indicator lamp or lamps (14) exceeds a predetermined level due to increased resistance of the indicator lamp or lamps (14) caused by the heating effect of said sensing pulse.

4. A flasher circuit as claimed in claim 3, wherein the supply circuit includes a zener diode (ZD1), and the voltage at the cathode of the zenor diode (ZD1) is held below the zener voltage until the voltage drop across the indicator lamp or lamps (14) has exceeded said predetermined value.

5.  A flasher circuit as claimed in claim 4, wherein the anode of the zener diode (ZD1) is connected to a control terminal of a first transistor (TR1), a second transistor (TR2) has its control terminal connected to the main conduction path of the first transistor (TR1) and also has its own conduction path connected in series with the indicator lamp or lamps (14), and a diode (D2) has its cathode connected to a point between the second transistor (TR2) and the indicator lamp or lamps (14) and its anode connected to the cathode of the zener diode (ZD2).

6.  A flasher circuit as claimed in any one of claims 2 to 5, wherein the sensor circuit includes a capacitor (C), and the sensing pulse is derived from a charging cycle of the capacitor (C).

7.  A flasher circuit as claimed in any preceding claim, further comprising a visual indicator device (22) which is energised concomitantly with the indicator lamp or lamps (14).

8. A flasher circuit as claimed in claim 7, wherein the indicator device (22) is connected in series with the main conduction path of a transistor (TR3), and the transistor (TR3) is rendered conductive in response to a predetermined voltage drop across a circuit element (D3) electrically connected to the indicator lamp or lamps (14).

9. A flasher circuit as claimed in claim 8, wherein a zener diode (ZD2) is connected across said transistor (TR3) in parallel with the main conduction path thereof.

10. A flasher circuit as claimed in claim 8 or 9, wherein a further transistor (TR2) has its main conduction path connected in series with and between said circuit element (D3) and the indicator lamp or lamps (14), a control terminal of the further transistor (TR2) being connected to the supply and sensor circuits.

11. A flasher circuit as claimed in claim 10, wherein a zener diode (ZD3) has its cathode connected to a connection point between said circuit element (D3) and the further transistor (TR2), and has its anode connected to the supply and sensor circuits.

12. A flasher circuit as claimed in any one of claims 8 to 11, wherein said circuit element is a diode (D3).

13.　　　A flasher circuit as claimed in claim 12, wherein a resistance (R7) is connected in parallel with the diode (D3) to prevent the indicator device (22) from being energised if a current of less that a predetermined magnitude flows through the diode (D3).

14. A flasher circuit as claimed in any preceding claim, wherein separate sensing and supply circuits are provided for the left- and right-hand indicator lamp or lamps (14), respectively.

15. A flasher circuit as claimed in any preceding claim, wherein said direction indicator lamps (14) are provided on a trailer, and the sensor and supply circuits are connected to a flasher unit (10) which operates direction indicator lamps (12) of a towing vehicle for said trailer.

FIG.I.

FIG.2.

0109730

0109730

European Patent
Office

EUROPEAN SEARCH REPORT

Application number

EP 83 30 4994

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | FR-A-2 173 576 (WESTFÄLISCHE METALL INDUSTRIE KG. HUECK & CO.) * Figure 3; page 5, line 1 - page 6, line 28 * | 1-3,7, 15 | B 60 Q 11/00 B 60 Q 1/38 |
| A | FR-A-2 308 523 (SOCIETE KLAXON S.A.) * Figure 5 * | 1 | |
| A | GB-A-1 464 303 (G & P LEISURE PRODUCTS LTD.) * Figure 3 * | 1 | |

TECHNICAL FIELDS
SEARCHED (Int. Cl. ³)

B 60 Q 11/00
B 60 Q 1/38

The present search report has been drawn up for all claims

| Place of search | Date of completion of the search | Examiner |
|---|---|---|
| THE HAGUE | 10-02-1984 | ONILLON C.G.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82